# FASCICULE DE BREVET EUROPEEN

(11) **EP 4 160 270 B1**
(45) Date de publication et mention de la délivrance du brevet: **02.07.2025**
(21) Numéro de dépôt: 22198154.1
(22) Date de dépôt: 27.09.2022
(51) Int. Cl.: G01S 17/34, G01S 17/89, G01S 7/481, G01S 7/4912, G01S 7/4911

(54) **SYSTÈME IMAGEUR LIDAR À DÉTECTION HÉTÉRODYNE DE TYPE FMCW A RÉSOLUTION EN DISTANCE AMÉLIORÉE**
FMCW-HETERODYN-LIDAR-BILDGEBUNGSSYSTEM MIT VERBESSERTER FERNAUFLÖSUNG
LIDAR IMAGING SYSTEM WITH FMCW HETERODYNE DETECTION WITH IMPROVED DISTANCE RESOLUTION

(30) Priorité: 30.09.2021 FR 2110310
(43) Date de publication de la demande: 05.04.2023
(73) Titulaire: Commissariat à l'Energie Atomique et aux Energies Alternatives, 75015 Paris (FR)
(72) Inventeur: DAAMI, Anis, 38054 GRENOBLE Cedex 09 (FR); FREY, Laurent, 38054 GRENOBLE CEDEX 09 (FR)
(74) Mandataire: Brevalex

(56) Documents cités:
- US-A1- 2019 064 358
- US-A1- 2020 011 994
- US-A1- 2020 300 993

## Description

### DOMAINE TECHNIQUE

Le domaine de l'invention est celui des systèmes imageurs LIDAR à détection hétérodyne à onde continue modulée en fréquence (FMCW, pour *Frequency Modulated Continuous Wave,* en anglais).

### ÉTAT DE LA TECHNIQUE ANTÉRIEURE

Les systèmes imageurs LIDAR à détection hétérodyne de type FMCW permettent de déterminer une distance d'une scène éclairée par un signal optique cohérent. Un tel système imageur repose sur le principe de la détection hétérodyne, dans le sens où on exploite des propriétés d'un signal hétérodyne formé par l'interférence entre un signal de référence et un signal rétrodiffusé par la scène. Ces deux signaux optiques sont cohérents entre eux et proviennent d'un même signal optique, dit primaire, émis par une source optique. Les documents US 2020/300993 A1, US 2019/064358 A1, et US 2020/011994 A1 décrivent différents exemples de systèmes imageurs LIDAR de type FMCW.

A ce titre, le document WO2021/144357A1 décrit un exemple d'un tel système imageur, appelé ici de type 'flash' dans la mesure où il est adapté à éclairer une pluralité de points de la scène de manière simultanée et à en déterminer une cartographie de distance (image de distance).

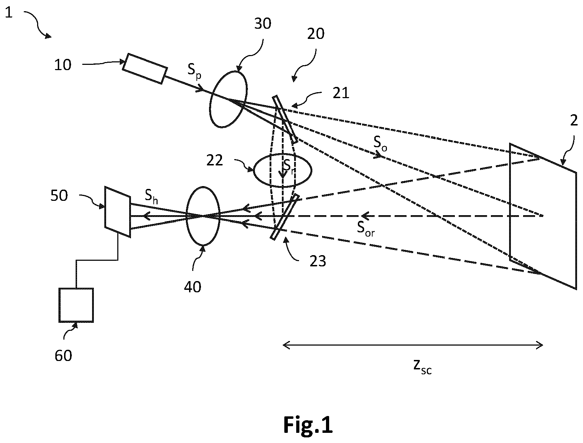

La figure 1 est une vue schématique et partielle d'un tel système imageur 1. Il comporte *α minima* :
∘ une source optique 10 du signal dit primaire Sₚ, cohérent, continu et modulé en fréquence ;
∘ un dispositif optique 20 de séparation et recombinaison, comportant un élément optique séparateur 21 adapté à diviser le signal primaire Sₚ en un signal objet Sₒ dirigé vers la scène 2 et en un signal de référence Sᵣ dirigé vers un photodétecteur 50 ; un élément optique 22 de mise en forme du signal de référence Sᵣ ; et un élément optique recombineur 23 adapté à diriger vers le photodétecteur 50 suivant un même axe optique le signal de référence Sᵣ ainsi qu'une partie S_{or,c} du signal objet rétrodiffusé Sₒᵣ ;
∘ un dispositif optique 30 de projection, adapté à projeter le signal objet Sₒ pour éclairer toute la scène 2 de manière simultanée ;
∘ un dispositif optique 40 d'imagerie, adapté à transmettre la partie collectée S_{or,c} du signal objet rétrodiffusé Sₒᵣ et à former l'image de la scène éclairée 2 dans le plan de détection du photodétecteur 50. Il comporte un élément optique de collection qui collecte les faisceaux lumineux définissant la partie S_{or,c} du signal objet rétrodiffusé Sₒᵣ ;
∘ le photodétecteur 50, ici un photodétecteur matriciel, adapté à recevoir la partie collectée S_{or,c} du signal objet rétrodiffusé Sₒᵣ et le signal de référence Sᵣ, lesquels interfèrent pour former un signal hétérodyne Sₕ présentant une fréquence de battement f_{b} ;
∘ une unité de traitement 60, adaptée à déterminer une distance z_{sc} (et ici une cartographie de distance) de la scène 2 à partir de la fréquence de battement f_{b} du signal hétérodyne Sₕ.

Le signal primaire Sₚ présente une variation de fréquence instantanée, avec par exemple une fréquence de départ f₀ et une variation de la valeur B (appelée *chirp,* en anglais) sur une période T. Le signal primaire Sₚ dit *chirpé* est une onde sinusoïdale dont la fréquence instantanée évolue ici linéairement au cours du temps.

Le photodétecteur 50 reçoit ainsi la partie collectée S_{or,c} du signal objet rétrodiffusé Sₒᵣ, qui est une réplique atténuée et retardée du signal objet Sₒ avec un retard τ. Le retard se traduit par une différence de fréquence f_{b} entre les deux signaux dans l'intervalle [τ ; T], avec T>>τ, à savoir entre le signal de référence Sₒᵣ et le signal objet rétrodiffusé et collecté S_{or,c}. Le retard τ est égal à 2z_{sc}/c environ lorsqu'on néglige le trajet du signal de référence Sᵣ, où c est la vitesse de la lumière dans le vide. Cette fréquence f_{b}, dite fréquence de battement, est égale à la différence entre la fréquence du signal de référence Sᵣ et celle du signal objet rétrodiffusé et collecté S_{or,c}. Sa valeur peut être déterminée dans le domaine temporel par comptage du nombre d'oscillations du signal hétérodyne Sₕ sur la période T, ou dans le domaine fréquentiel par transformée de Fourier rapide.

On peut alors déterminer, à partir de la valeur de cette fréquence de battement f_{b}, la distance z_{sc} entre la scène éclairée 2 et le photodétecteur matriciel 50. En effet, sachant que f_{b}/B = τ/T, et que τ = 2z_{sc}/c, on peut alors déterminer la distance z_{sc} de la scène par la relation : z_{sc} ≈ f_{b}cT/2B, avec une résolution en distance Δz_{sc} = c/2B. La résolution en distance Δz_{sc} est définie comme le plus petit écart de distance dont le système imageur est capable de mesurer entre deux positions successives d'un même objet de la scène ou entre deux objets latéralement distincts. A titre d'exemple, pour un *chirp* B de 7.5 GHz, la résolution en distance Δz_{sc} est égale à 2cm.

Il existe cependant un besoin de disposer d'un système imageur présentant une résolution en distance améliorée. Pour cela, une approche serait d'augmenter la valeur du *chirp* B, lequel est habituellement produit par un déplacement de l'un des réflecteurs de la cavité laser, par exemple par effet piézoélectrique, ou par une modulation du courant d'injection de la source laser. Cependant, une telle augmentation de la valeur du *chirp* peut notamment conduire à fausser la valeur déterminée de la fréquence de battement f_{b} et donc celle de la distance z_{sc}, du fait notamment de la non-linéarité du *chirp* et/ou d'une modulation de la puissance optique de la source laser induite par la modulation du courant d'injection. Une alternative décrite dans le document Aflatouni et al. intitulé Nanophotonic coherent imager, Opt. Express 23 (4), 5117-5125

(2015) serait d'augmenter la résolution de la mesure de la fréquence de battement f_{b}, par exemple en comptant un nombre décimal d'oscillations du signal hétérodyne Sₕ sur la période T, mais cela revient à complexifier l'électronique de l'unité de traitement.

### EXPOSÉ DE L'INVENTION

L'invention a pour objectif de remédier au moins en partie aux inconvénients de l'art antérieur, et plus particulièrement de proposer un système imageur LIDAR à détection hétérodyne de type FMCW dont la résolution en distance est améliorée sans dégrader les performances du système imageur ni complexifier l'électronique de traitement.

Pour cela, l'objet de l'invention est un système imageur LIDAR de type FMCW, comportant :
∘ une source de lumière cohérente, adaptée à émettre un signal primaire Sₚ continu modulé en fréquence ;
∘ un dispositif optique de séparation et recombinaison, adapté à séparer le signal primaire Sₚ en un signal de référence Sᵣ dirigé vers un photodétecteur et en un signal objet Sₒ dirigé vers la scène, laquelle rétrodiffuse une partie du signal objet Sₒ appelée signal objet rétrodiffusé Sₒᵣ ; et adapté à diriger vers le photodétecteur suivant un même axe optique le signal de référence Sᵣ ainsi qu'une partie S_{or,c} du signal objet rétrodiffusé Sₒᵣ collectée par un élément optique de collection ;
∘ l'élément optique de collection, adapté à collecter la partie S_{or,c} du signal objet rétrodiffusé Sₒᵣ ;
∘ le photodétecteur, destiné à recevoir le signal de référence Sᵣ et la partie collectée S_{or,c} du signal objet rétrodiffusé S_{or,c}, lesquels interfèrent pour former un signal hétérodyne Sₕ ;
∘ une unité de traitement, adaptée à déterminer la distance z_{sc} de la scène à partir d'une fréquence de battement du signal hétérodyne Sₕ.

Selon l'invention, le système imageur comporte un réflecteur adapté à réfléchir en direction de la scène une partie S_{or,nc} du signal objet rétrodiffusé Sₒᵣ non collectée par l'élément optique de collection. Aussi, la partie collectée S_{or,c} du signal objet rétrodiffusé Sₒᵣ est formée de premiers faisceaux lumineux S_{or,c(1)} n'ayant pas été réfléchis par le réflecteur et de deuxièmes faisceaux lumineux S_{or,c(2)} ayant été réfléchis par le réflecteur puis par la scène. Le signal hétérodyne Sₕ présente donc une composante principale Sₕ₍₁₎ associée auxdits premiers faisceaux lumineux S_{or,c(1)}, et une composante secondaire Sₕ₍₂₎ associée auxdits deuxièmes faisceaux lumineux S_{or,c(2)}. L'unité de traitement est adaptée à déterminer la distance z_{sc} de la scène à partir d'une fréquence de battement f_{b(2)} de la composante secondaire Sₕ₍₂₎ du signal hétérodyne Sₕ.

Notons ici que les deuxièmes faisceaux lumineux S_{or,c(2)}, ayant été réfléchis par le réflecteur, appartiennent à la partie collectée S_{or,c} du signal objet rétrodiffusé Sₒᵣ, et que ce signal objet rétrodiffusé Sₒᵣ est un signal rétrodiffusé par la scène. On comprend alors que les deuxièmes faisceaux lumineux S_{or,c(2)} ont été réfléchis par la scène avant d'être collectés.

Certains aspects préférés mais non limitatifs de ce système imageur sont les suivants.

Le réflecteur peut être rétroréfléchissant, pour réfléchir en direction de la scène des faisceaux lumineux incidents suivant un axe de réflexion identique à leur axe d'incidence.

Le réflecteur peut présenter une bordure latérale située à une distance maximale rₘₐₓ d'un axe optique de l'élément optique de collection. Il peut être dimensionné de sorte que la distance maximale rₘₐₓ est inférieure à √(cz_{sc}/2B) lorsque le réflecteur est rétroréfléchissant, où c est la vitesse de la lumière dans le vide, et B est une variation de la fréquence du signal primaire Sₚ sur une période T de la modulation. Il peut être dimensionné de sorte que la distance maximale rₘₐₓ est inférieure à √(cz_{sc}/6B) lorsque le réflecteur est non rétroréfléchissant.

Le réflecteur peut être situé dans le plan de l'élément optique de collection.

Le réflecteur peut être situé en aval de l'élément optique de collection au niveau du photodétecteur.

D'une manière générale, le réflecteur peut être formé d'une surface continûment réfléchissante ou rétroréfléchissante, ou peut être formé de surfaces réfléchissantes ou rétroréfléchissantes non jointives et séparées les unes des autres par une surface transparente ou réfléchissante à la longueur d'onde des signaux optiques d'intérêt.

Le réflecteur peut être situé en amont de l'élément optique de collection avec un axe optique de collection qui le traverse, le réflecteur étant alors formé de surfaces réfléchissantes ou rétroréfléchissantes séparées les unes des autres et entourées par une surface transparente à la longueur d'onde du signal primaire Sₚ.

Le réflecteur peut comporter une surface centrale traversée par l'axe optique de collection, dans laquelle il est formé de surfaces réfléchissantes ou rétroréfléchissantes séparées les unes des autres et entourées par une surface transparente, et une surface périphérique qui entoure la surface centrale, dans laquelle les surfaces réfléchissante ou rétroréfléchissantes sont accolées les unes aux autres.

Le système imageur peut être adapté à n'éclairer qu'un point de la scène. Il peut en variante être adapté à éclairer simultanément une pluralité de points de la scène et comporter alors un dispositif optique de projection du signal objet Sₒ sur la scène pour éclairer simultanément la pluralité de points de la scène, ainsi qu'un dispositif optique d'imagerie adapté à former une image de la scène éclairée dans le plan du photodétecteur.

L'unité de traitement peut déterminer la fréquence de battement f_{b(2)} par comptage des oscillations de la composante secondaire S_{or,c(2)} du signal hétérodyne Sₕ.

L'unité de traitement peut être adaptée à déterminer une fréquence de battement f_{b(1)} de la composante principale Sₕ₍₁₎ du signal hétérodyne Sₕ, puis appliquer un filtre passe-bande au signal hétérodyne Sₕ excluant la fréquence de battement f_{b(1)} déterminée pour obtenir la composante secondaire Sₕ₍₂₎, et enfin à déterminer la fréquence de battement f_{b(2)} de la composante secondaire Sₕ₍₂₎. Déterminer la fréquence de battement f_{b(1)} de la composante principale Sₕ₍₁₎ du signal hétérodyne Sₕ peut être effectuée par comptage des oscillations du signal hétérodyne Sₕ.

L'unité de traitement peut déterminer la fréquence de battement f_{b(2)} par transformée de Fourier appliquée au signal hétérodyne Sₕ.

Le système imageur peut présenter une configuration dite mono-statique où un axe optique d'illumination de la scène par le signal objet Sₒ est identique à un axe optique de collection de l'élément optique de collection. Il peut alors comporter un miroir vers lequel le signal de référence Sᵣ est dirigé par un élément optique séparateur du dispositif optique de séparation et recombinaison.

Le système imageur peut présenter une configuration dite bi-statique où un axe optique d'illumination de la scène par le signal objet Sₒ est différent d'un axe optique de collection de l'élément optique de collection.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
la figure 1, déjà décrite, est une vue schématique et partielle d'un système imageur de type 'flash' selon un exemple de l'art antérieur ;

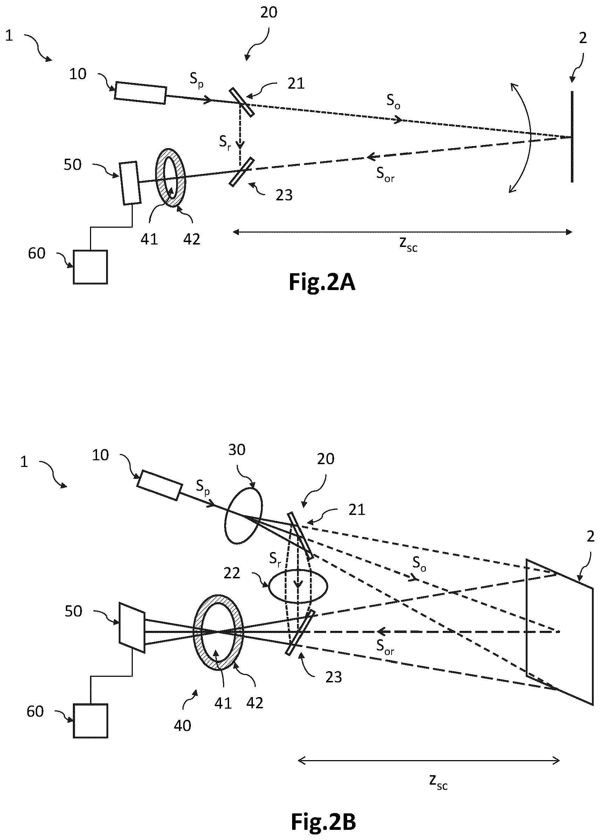

les figures 2A et 2B sont des vues schématiques et partielles de systèmes imageurs selon des modes de réalisation, l'un étant de type 'mono-point' (fig.2A) et l'autre de type 'flash' (fig.2B) ;

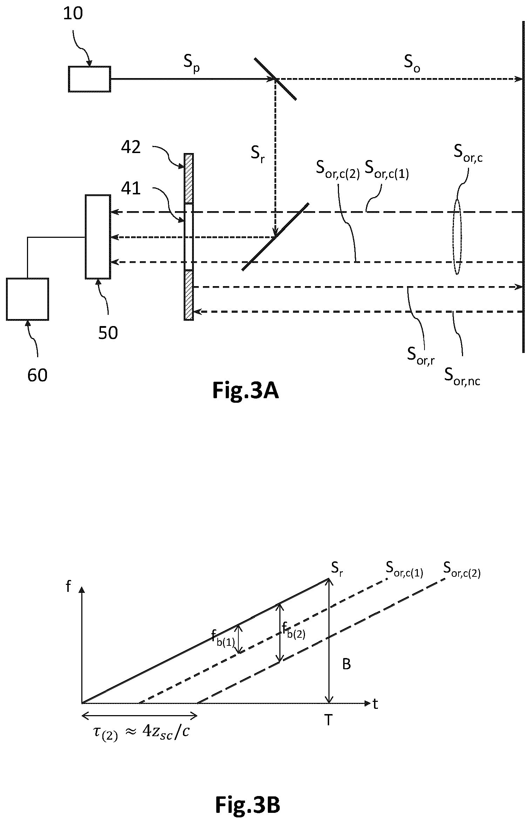

la figure 3A est une vue schématique et partielle d'un système imageur similaire à celui de la fig.2A, où les différents signaux optiques sont mis en évidence, en particulier le signal objet rétrodiffusé Sₒᵣ par la scène, dont une partie S_{or,c(1)} est directement collectée par l'élément optique de collection, et une autre partie S_{or,nc} est non collectée puis est réfléchie par un réflecteur en direction de la scène ;
la figure 3B illustre une évolution de la fréquence optique de différents signaux, dont le signal de référence Sᵣ, la partie S_{or,c(1)} directement collectée par l'élément optique de collection (premier écho), et la partie S_{or,c(2)} ayant été réfléchie par le réflecteur (deuxième écho), mettant ainsi en évidence les fréquences de battement principale f_{b(1)} et secondaire f_{b(2)} du signal hétérodyne Sₕ ;

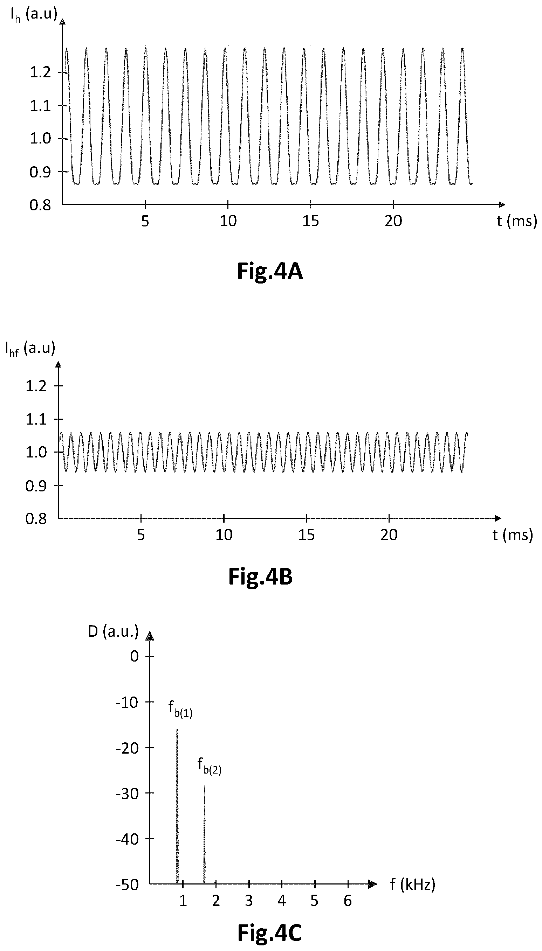

les figures 4A à 4C illustrent un exemple numérique de détermination des fréquences de battement principale f_{b(1)} et secondaire f_{b(2)} du signal hétérodyne Sₕ, la fig.4A représentant le signal hétérodyne Sₕ, la fig.4B représentant la composante Sₕ₍₂₎ associée au deuxième écho S_{or,c(2)}, et la fig.4C représentant la densité spectrale de puissance mettant en évidence les fréquences de battement f_{b(1)} et f_{b(2)} ;

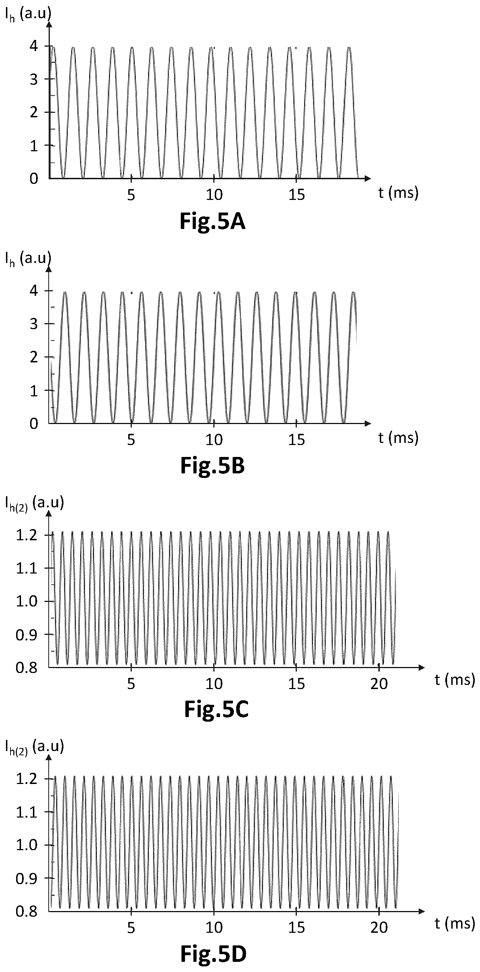

les figures 5A et 5B illustrent des signaux hétérodynes Sₕ détectés par un système imageur selon un exemple de l'art antérieur, pour deux objets situés à des distances différentes ;
les figures 5C et 5D illustrent des signaux hétérodynes Sₕ détectés par un système imageur selon un mode de réalisation, pour les deux mêmes objets situés à des distances différentes ;

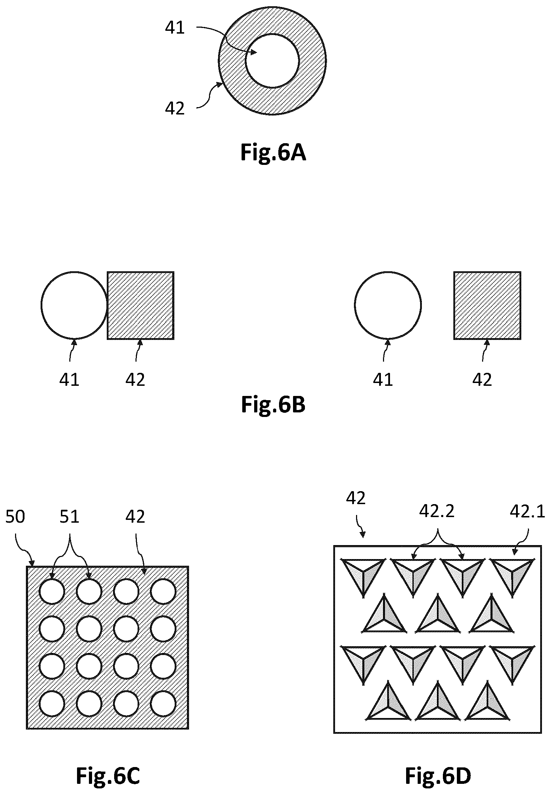

les figures 6A à 6D sont des vues schématiques d'exemples du réflecteur d'un système imageur selon un mode de réalisation, où le réflecteur est un anneau entourant l'élément optique de collection (fig.6A) ; est un carré accolé ou distant de l'élément optique de collection (fig.6B) ; est situé au niveau du photodétecteur (fig.6C) ; est formé de surfaces rétroréfléchissantes séparées les unes des autres par une surface transparente (fig.6D) ;

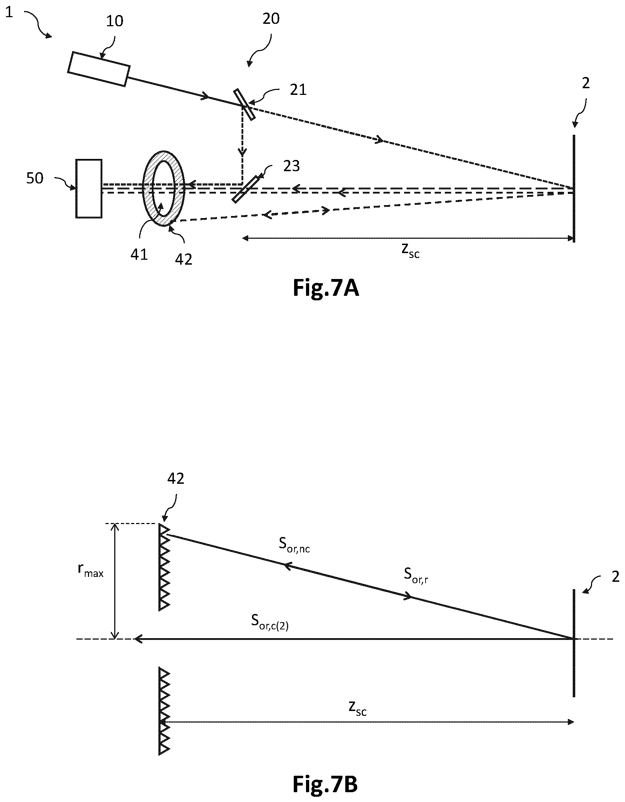

la figure 7A est une vue schématique et partielle d'un système imageur selon un mode de réalisation dans lequel il est de type mono-point et où le réflecteur est rétroréfléchissant ; et la fig.7B est une vue détaillée de la fig.7A mettant en évidence le signal rétrodiffusé et non collecté S_{or,nc}, le signal réfléchi S_{or,r}, et le deuxième écho S_{or,c(2)} ;

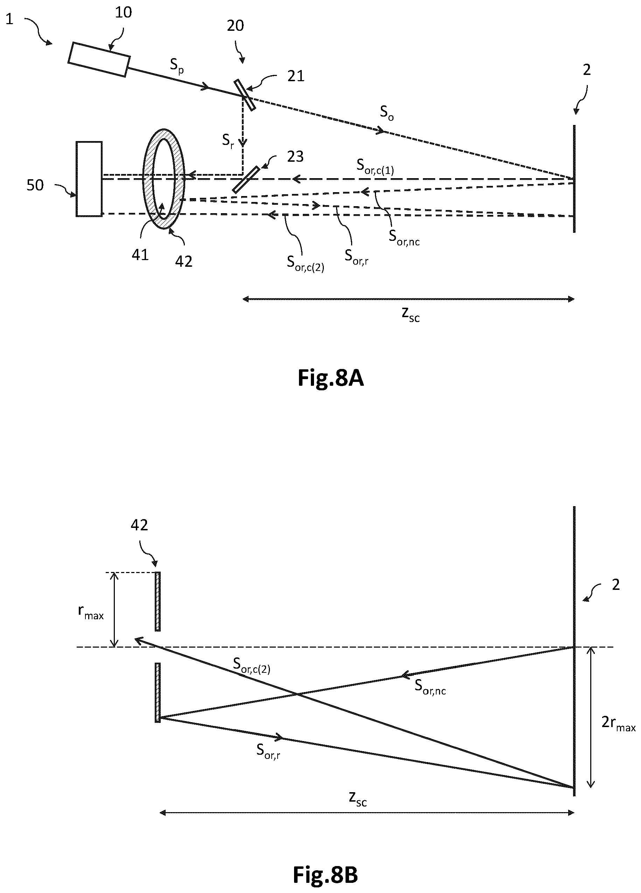

la figure 8A est une vue schématique et partielle d'un système imageur selon un mode de réalisation dans lequel il est de type mono-point et où le réflecteur est non rétroréfléchissant ; et la fig.8B est une vue détaillée de la fig.8A mettant en évidence le signal rétrodiffusé et non collecté S_{or,nc}, le signal réfléchi S_{or,r}, et le deuxième écho S_{or,c(2)} ;

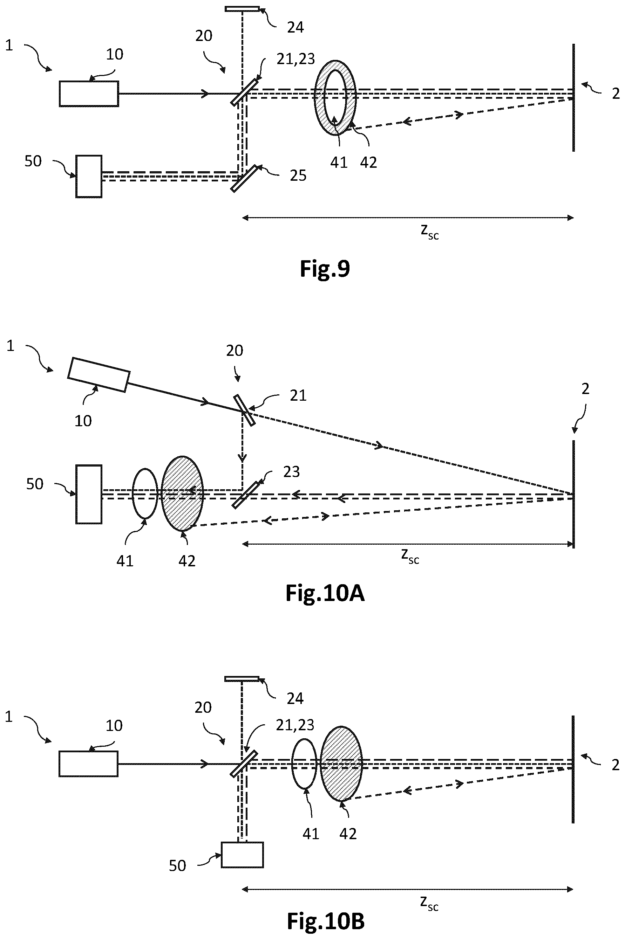

la figure 9 est une vue schématique et partielle d'un système imageur selon un mode de réalisation dans lequel il est de type mono-point et en configuration mono-statique ;
les figures 10A et 10B sont des vues schématiques et partielles d'un système imageur selon des variantes de réalisation, où le réflecteur est situé en amont de l'élément optique de collection et est traversé par l'axe optique de ce dernier, en configuration bi-statique (fig.10A) et en configuration mono-statique (fig.10B).

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. Par ailleurs, les termes « compris entre ... et ... » et équivalents signifient que les bornes sont incluses, sauf mention contraire.

L'invention porte sur un système imageur LIDAR à détection hétérodyne de type à signal continu modulé en fréquence (FMCW, pour *Frequency-Modulated Continuous-Wave,* en anglais), permettant de déterminer une distance z_{sc} d'une scène, voire une cartographie de distance z_{sc(i,j)} (image de distance), avec une résolution en distance Δz_{sc} améliorée.

Le système imageur est dit « LIDAR » (acronyme de *Light Detection and Ranging,* en anglais) dans la mesure où un signal optique cohérent est utilisé pour déterminer une distance z_{sc} d'un point de la scène ou une cartographie de distance z_{sc(i,j)} de la scène. Dans le cadre de l'invention, le système imageur peut être soit de type 'mono-point' dans le sens où le signal objet n'éclaire qu'un point de la scène, avec éventuellement un balayage spatial de la scène par le signal objet, soit de type 'flash' dans le sens où le signal objet éclaire simultanément plusieurs points de la scène et où le système imageur acquiert l'image de la scène pour en déterminer une cartographie de distance.

De plus, le système imageur est dit à détection hétérodyne dans la mesure où, pour déterminer la distance de la scène éclairée, on détermine une fréquence dite de battement d'un signal hétérodyne formé par l'interférence entre un signal de référence d'un oscillateur local et un signal rétrodiffusé par la scène éclairée, ces deux signaux optiques étant cohérents entre eux. En effet, le signal de référence et le signal projeté sur la scène sont tous deux issus d'un même signal optique primaire émis par la source optique. Enfin, la détection hétérodyne est de type FMCW dans la mesure où le signal optique primaire est un signal continu et modulé en fréquence.

Les figures 2A et 2B sont des vues schématiques et partielles d'un système imageur LIDAR à détection hétérodyne de type FMCW, selon des variantes de réalisation, où l'une correspond à un système imageur de type 'mono-point', et l'autre à un système imageur de type 'flash'. Les figures sont très schématiques : la scène est ici plane mais dans les faits elle peut évidemment ne pas l'être.

D'une manière générale, le système imageur 1 comporte *a minima* :
∘ une source de lumière cohérence 10, adaptée à émettre un signal primaire Sₚ, cohérent, continu et modulé en fréquence ;
∘ un dispositif optique de séparation et recombinaison 20, comportant :
   - au moins un élément optique séparateur 21 adapté à séparer le signal primaire Sₚ en un signal de référence Sᵣ dirigé vers un photodétecteur 50 et en un signal objet Sₒ dirigé vers la scène 2, laquelle rétrodiffuse une partie du signal objet Sₒ appelée signal objet rétrodiffusé Sₒᵣ ;
   - au moins un élément optique recombineur 23 adapté à diriger vers le photodétecteur 50 suivant un même axe optique le signal de référence Sᵣ ainsi qu'une partie S_{or,c} du signal objet rétrodiffusé Sₒᵣ collectée ou destinée à être collectée par un élément optique de collection 41 ;
∘ un élément optique de collection 41, adapté à collecter la partie S_{or,c} du signal objet rétrodiffusé Sₒᵣ ;
∘ le photodétecteur 50, destiné à recevoir le signal de référence Sᵣ et la partie collectée S_{or,c} du signal objet rétrodiffusé Sₒᵣ, lesquels interfèrent pour former un signal hétérodyne Sₕ ;
∘ une unité de traitement 60, adaptée à déterminer une distance z_{sc} de la scène 2 à partir d'une fréquence de battement du signal hétérodyne Sₕ.

Pour améliorer la résolution en distance du système imageur 1, celui-ci comporte en outre un réflecteur 42 adapté à réfléchir en direction de la scène 2 une partie S_{or,nc} du signal objet rétrodiffusé Sₒᵣ non collectée par l'élément optique de collection 41. Aussi, la partie collectée S_{or,c} du signal objet rétrodiffusé Sₒᵣ est formée de premiers faisceaux lumineux S_{or,c(1)} du signal objet rétrodiffusé Sₒᵣ n'ayant pas été réfléchis par le réflecteur 42 et de deuxièmes faisceaux lumineux S_{or,c(2)} du signal objet rétrodiffusé Sₒᵣ ayant été réfléchis par le réflecteur 42. Il en résulte que le signal hétérodyne Sₕ présente une composante principale Sₕ₍₁₎ associée aux premiers faisceaux lumineux S_{or,c(1)}, ainsi qu'une composante secondaire Sₕ₍₂₎ associée aux deuxièmes faisceaux lumineux S_{or,c(2)}. La composante principale Sₕ₍₁₎ présente une fréquence de battement f_{b(1)}, et la composante secondaire Sₕ₍₂₎ présente une fréquence de battement f_{b(2)} différente de f_{b(1)}.

De plus, l'unité de traitement 60 est adaptée à déterminer la distance z_{sc} de la scène 2 à partir de la fréquence de battement f_{b(2)} de la composante secondaire Sₕ₍₂₎ du signal hétérodyne Sₕ. Ce faisant, comme décrit en détail plus loin, la distance z_{sc} est déterminée avec une résolution en distance Δz_{sc} améliorée d'un facteur 2 par rapport à la situation classique où la distance z_{sc} serait déterminée à partir de la seule fréquence de battement f_{b(1)}.

La fig.2A illustre un système imageur 1 selon un mode de réalisation de type 'mono-point'. Aussi, le signal objet Sₒ n'éclaire qu'un point de la scène 2 à chaque instant, et le photodétecteur 50 peut être une photodiode. Le système imageur 1 est donc adapté à déterminer la distance z_{sc} du point éclairé de la scène 2. Notons que le système imageur 1 peut être adapté à balayer spatialement la scène 2 par le signal objet Sₒ, point par point.

Le système imageur 1 comporte une source optique 10 d'un signal dit primaire Sₚ, cohérent continu et modulé en fréquence. La source optique 10 est de préférence une source laser émettant le signal primaire Sₚ. A titre d'exemple, le signal primaire Sₚ peut présenter une fréquence optique située dans l'infrarouge. De plus, le signal primaire Sₚ est modulé en fréquence, par exemple ici de manière linéaire, à partir d'une fréquence de départ f₀ sur une période de répétition T avec une largeur de bande B (*chirp*). Le signal est ici un signal *chirpé,* c'est-à-dire une onde sinusoïdale dont la fréquence instantanée évolue linéairement au cours du temps.

La source optique 10 présente une longueur de cohérence typiquement supérieure à la différence de chemin optique entre la voie de référence et la voie objet. La voie de référence est le trajet suivi par le signal de référence Sᵣ entre la source optique 10 et le photodétecteur 50. La voie objet est le trajet suivi par le signal objet Sₒ à partir de la source optique 10 jusqu'à la scène 2, et le trajet suivi par le signal objet rétrodiffusé Sₒᵣ par la scène jusqu'au photodétecteur 50. Cette différence de chemin optique peut correspondre, au premier ordre, à deux fois la distance maximale entre le système imageur 1 et la scène 2.

La source optique 10 peut ainsi comporter, dans le cas d'une émission dans le domaine du proche infrarouge (entre 0.7 et 2µm), une source laser 11 de type à cavité verticale émettant par la surface (VCSEL, pour *Vertical-Cavity Surface Emitting Laser,* en anglais) qui a généralement une longueur de cohérence de l'ordre du mètre, voire une source laser du type à émission par la tranche (EEL, pour *Edge Emitting Laser,* en anglais) qui peut avoir une longueur de cohérence de l'ordre de la dizaine voire centaine de mètres.

Le système imageur 1 comporte un dispositif optique de séparation/recombinaison 20. Celui-ci comporte au moins un élément optique séparateur 21 adapté à séparer le signal primaire Sₚ en un signal objet Sₒ d'une part et en un signal de référence Sᵣ d'autre part. Le signal de référence Sᵣ correspond, dans le cadre de la détection hétérodyne, au signal d'un oscillateur local (LO, pour *Local Oscillator* en anglais). Il comporte également au moins un élément optique recombineur 23 adapté à diriger vers le photodétecteur 50 suivant un même axe optique, en les superposant spatialement au moins en partie, le signal de référence Sᵣ et une partie collectée S_{or,c} du signal objet rétrodiffusé Sₒᵣ.

L'élément optique séparateur 21 peut être, par exemple, une lame semi-réfléchissante ou un cube séparateur. Ici, une lame semi-réfléchissante 21 transmet une partie du signal primaire Sₚ, qui devient le signal objet Sₒ, et réfléchit une partie du signal primaire Sₚ qui devient le signal de référence Sᵣ. La répartition en intensité du signal objet Sₒ et du signal de référence Sᵣ est de préférence non égalitaire, et peut ainsi être de 90% pour le signal objet Sₒ et de 10% pour le signal de référence Sₚ.

L'élément optique recombineur 23 est adapté donc à diriger en direction du photodétecteur 50 suivant le même axe optique le signal objet rétrodiffusé Sₒᵣ et le signal de référence Sᵣ. Il peut s'agir d'une lame semi-réfléchissante ou d'un cube combineur. Ici, une lame-semi-réfléchissante 23 réfléchit le signal de référence Sᵣ en direction du photodétecteur 50 suivant un axe optique passant par le centre de la lame semi-réfléchissante 23 et par le centre du photodétecteur 50, et transmet le signal objet rétrodiffusé S_{or,c} suivant ce même axe optique. Les deux signaux optiques se propagent donc en direction du photodétecteur matriciel 50 sur une voie commune, suivant le même axe optique.

Le dispositif optique 20 est adapté à assurer une superposition spatiale (au moins en partie) des deux signaux optiques Sᵣ et Sₒᵣ suivant le même axe optique, améliorant ainsi la combinaison des deux signaux optiques par interférence, ce qui permet d'améliorer l'intensité du signal hétérodyne Sₕ. Pour cela, des éléments optiques de mise en forme des signaux optiques (non représentés ici) peuvent être prévus, comme le décrit le document WO2021/144357A1 mentionné précédemment.

Le système imageur 1 comporte au moins un élément optique de collection 41 d'une partie S_{or,c} du signal objet rétrodiffusé Sₒᵣ, cette partie S_{or,c} étant ensuite reçue par le photodétecteur 50. Il peut être un élément optique en espace libre, et il peut s'agir d'un diaphragme d'ouverture qui définit la pupille physique. Le diaphragme d'ouverture peut être défini par le contour d'une lentille de focalisation. L'élément optique de collection peut, par ailleurs, être formé de plusieurs lentilles entre lesquelles est disposé le diaphragme d'ouverture. L'élément optique de collection 41 peut être situé en amont ou en aval de l'élément optique recombineur 23. En variante, l'élément optique de collection 41 peut ne pas être un objet optique dédié, mais être défini par la surface sensible du photodétecteur 50, notamment dans le cas d'un système imageur 1 de type mono-point.

Selon l'invention, le système imageur 1 comporte un réflecteur 42 adapté à réfléchir en direction de la scène 2 une partie notée S_{or,nc} du signal objet rétrodiffusé Sₒᵣ qui n'a pas été collectée par l'élément optique de collection 41. Le réflecteur 42 est ici un réflecteur spéculaire, dans le sens où il réfléchit les faisceaux lumineux de manière non diffuse ou quasiment non diffuse. Le réflecteur 42 peut être situé au niveau de l'élément optique de collection 41, par exemple en étant coplanaire à celui-ci, ou être situé en amont ou en aval. Comme décrit plus loin, il peut être situé au niveau du photodétecteur 50.

Comme décrit plus loin, le réflecteur 42 peut être simplement réfléchissant, c'est-à-dire qu'il réfléchit les faisceaux lumineux incidents suivant la loi de réflexion de Snell-Descartes, ou être rétroréfléchissant, c'est-à-dire que les faisceaux lumineux sont réfléchis suivant un axe de réflexion identique à l'axe d'incidence. A ce titre, le réflecteur 42 peut être un miroir à coins de cube ou une couche de microbilles, comme décrit notamment dans le document WO2015/158999A1.

L'élément optique recombineur 23 peut être situé en amont ou en aval de l'élément optique de collection 41 et du réflecteur 42. Dans le cas où il est situé en amont, le signal de référence Sᵣ est orienté de préférence de manière à ne traverser que l'élément optique de collection 41 et ne pas être incident sur le réflecteur 42. On évite ainsi qu'il soit réfléchi par le réflecteur 42, ce qui pourrait induire des interférences supplémentaires avec un signal objet rétrodiffusé Sₒᵣ à des fréquences de battement différentes des fréquences f_{b(1)} et f_{b(2)}. Par ailleurs, le fait de placer l'élément optique recombineur 23 en amont permet de placer l'élément optique de collection 41 et le réflecteur 42 au plus près du photodétecteur 50, ce qui augmente le champ de vue du système imageur 1.

Le système imageur 1 comporte en outre un photodétecteur 50, qui est ici une photodiode (ou par exemple une paire de photodiodes balancées) dans la mesure où le système imageur 1 est de type 'mono-point'. Il reçoit le signal de référence Sᵣ et la partie collectée S_{or,c} du signal objet rétrodiffusé Sₒᵣ, lesquels interfèrent entre eux pour former un signal hétérodyne Sₕ qui présente une fréquence de battement principale f_{b(1)}, et comme décrit en détail plus loin, une fréquence de battement secondaire f_{b(2)}.

Le système imageur 1 comporte une unité de traitement 60 adaptée à déterminer la distance z_{sc} du point éclairé de la scène 2 à partir d'une fréquence de battement du signal hétérodyne Sₕ reçu par le photodétecteur 50, et plus précisément à partir de la fréquence de battement f_{b(2)}.

Avant de détailler le fonctionnement du système imageur 1 et de mettre en évidence l'amélioration de la résolution en distance Δz_{sc}, notons que l'invention couvre également la configuration du système imageur 1 en mode 'flash'.

A ce titre, la fig.2B illustre un tel système imageur 1, similaire à celle de la fig.1 mais qui s'en distingue en ce qu'il comporte un réflecteur 42 adapté à réfléchir en direction de la scène 2 une partie S_{or,nc} du signal objet rétrodiffusé Sₒᵣ non collecté par l'élément optique de collection 41, et en ce que l'unité de traitement 60 est adaptée à déterminer la distance z_{sc} de la scène 2 éclairée à partir de la fréquence de battement secondaire f_{b(2)} du signal hétérodyne Sₕ.

A la différence du système imageur 1 de la fig.2A, le système imageur 1 selon cette variante comporte un dispositif optique de projection 30 du signal objet Sₒ en direction de la scène de manière à l'éclairer entièrement de manière simultanée. Par ailleurs, le dispositif optique 20 comporte également au moins un élément optique de mise en forme 22, situé sur le chemin optique du signal de référence Sᵣ entre l'élément optique séparateur 21 et l'élément optique recombineur 23. Cela permet de mettre en forme le faisceau lumineux du signal de référence Sᵣ pour améliorer sa superposition spatiale avec le faisceau lumineux de la partie collectée S_{or,c} du signal objet rétrodiffusé Sₒᵣ. Il comporte également un dispositif optique d'imagerie 40 adapté à transmettre la partie S_{or,c} du signal objet rétrodiffusé Sₒᵣ et à former l'image de la scène 2 éclairée dans le plan de détection du photodétecteur 50. Ces dispositifs et éléments optiques sont similaires à ceux décrits dans le document WO2021/144357A1 et ne sont donc pas décrits en détail ici.

Enfin, le photodétecteur 50 est de type matriciel, et comporte une matrice de pixels de détection s'étendant dans un plan de réception. Il peut s'agir d'un photodétecteur de type CMOS (voire de type CCD). Le plan de réception du photodétecteur matriciel 50 est situé dans un plan conjugué de la scène par le dispositif optique d'imagerie 40 (à la profondeur de champ près). Autrement dit, l'image de la scène 2 se forme dans le plan de réception du photodétecteur matriciel 50. Chaque pixel de détection est destiné à recevoir le signal hétérodyne Sₕ.

Le fonctionnement du système imageur 1 est maintenant décrit en référence aux figures 3A et 3B, où la fig.3A est une vue schématique et partielle d'un système imageur 1 similaire à celui de la fig.2A mettant en évidence les différents signaux optiques présents, et où la fig.3B illustre l'évolution temporelle de la fréquence de différents signaux optiques, mettant en évidence les fréquences de battement principale f_{b(1)} et secondaire f_{b(2)}.

La source optique 10 émet le signal primaire Sₚ cohérent, continu et modulé en fréquence, dont une partie (signal objet Sₒ) est transmise par l'élément optique séparateur 21 en direction de la scène 2 pour en éclairer un point. Une partie du signal primaire Sₚ est dirigée en direction du photodétecteur 50 et forme le signal de référence Sᵣ.

La scène 2 rétrodiffuse une partie du signal objet Sₒ qui forme alors le signal objet rétrodiffusé Sₒᵣ. Celui-ci comporte une partie S_{or,c} qui est collectée par l'élément optique de collection 41, et une partie S_{or,nc} qui n'est pas collectée par l'élément optique de collection 41. La partie non collectée S_{or,nc} peut cependant être réfléchie par le réflecteur 42 en direction de la scène 2, ce qui forme en retour le signal réfléchi S_{or,r}, dont une partie est ensuite à nouveau rétrodiffusée par la scène 2 puis collectée par l'élément optique de collection 41.

Il en résulte que l'élément optique de collection 41 collecte une partie S_{or,c} du signal objet rétrodiffusé Sₒᵣ, formée des faisceaux lumineux S_{or,c(1)} ayant été directement collectés sans avoir été réfléchis par le réflecteur 42 (et que l'on appelle par la suite 'premier écho'), et des faisceaux lumineux S_{or,c(2)} ayant été réfléchis par le réflecteur 42 avant d'être ensuite collectés (et que l'on appelle par la suite 'deuxième écho').

L'élément optique recombineur 23 reçoit ainsi la partie collectée S_{or,c} du signal objet rétrodiffusé Sₒᵣ ainsi que le signal de référence Sᵣ. Notons que l'on appelle partie collectée S_{or,c} les faisceaux lumineux qui ont été ou qui vont être collectés par l'élément optique de collection 41. Les signaux S_{or,c} et Sᵣ sont dirigés en direction du photodétecteur 50 suivant le même axe optique et de manière au moins en partie superposés l'un à l'autre. Ils interfèrent l'un avec l'autre et forment le signal hétérodyne Sₕ.

Il en résulte donc que le signal hétérodyne reçu Sₕ comporte une composante principale Sₕ₍₁₎ associée au premier écho S_{or,c(1)} et présente une fréquence de battement f_{b(1)}, ainsi qu'une composante secondaire Sₕ₍₂₎ associée au deuxième écho S_{or,c(2)} et ayant une fréquence de battement f_{b(2)} différente de f_{b(1)}. La composante secondaire Sₕ₍₂₎ présente une amplitude qui est généralement inférieure à celle de la composante principale Sₕ₍₁₎, dans la mesure où le facteur de réflectance diffuse de la scène est inférieur à 1, et où le réflecteur 42 ne collecte pas l'intégralité de la lumière rétrodiffusée par la scène et non collectée par l'élément optique de collection 41.

La fréquence de battement f_{b(1)} entre le signal de référence Sᵣ et le premier écho f_{oc,r(1)} est égale à : f_{b(1)} = τ₍₁₎B/T = ((2z_{sc}-zᵣ)/c)×(B/T). Et la fréquence de battement f_{b(2)} entre le signal de référence Sᵣ et le deuxième écho f_{oc,r(2)} est égale à : f_{b(2)} = τ₍₂₎B/T = ((4z_{sc}-zᵣ)/c)×(B/T). Aussi, si l'on néglige la distance zᵣ de la voie de référence, la fréquence f_{b(2)} est égale à 2×f_{b(1)}. Quant à la résolution en distance Δz_{sc}, elle est indépendante de la distance zᵣ, et est égale à c/2B lorsqu'elle est définie à partir de la fréquence de battement f_{b(1)}, mais est égale à c/4B lorsqu'elle est définie à partir de la fréquence de battement f_{b(2)}. Aussi, la résolution en distance Δz_{sc} dans le cadre de l'invention est améliorée d'un facteur 2 par rapport à la situation classique où elle ne serait basée qu'à partir de la fréquence de battement f_{b(1)}.

L'unité de traitement 60 détermine ensuite la fréquence de battement f_{b(2)} de la composante secondaire Sₕ₍₂₎ du signal hétérodyne Sₕ détecté, puis en déduit la distance z_{sc} de la scène 2. Comme indiqué précédemment, la fréquence de battement f_{b(2)} peut être déterminée dans le domaine temporel par comptage du nombre d'oscillations du signal hétérodyne sur la période T, ou dans le domaine fréquentiel par transformée de Fourier rapide.

Dans le cas d'une méthode de détermination de la fréquence de battement par comptage des oscillations, une approche consiste à déterminer tout d'abord la fréquence de battement f_{b(1)} de la composante principale Sₕ₍₁₎ du signal hétérodyne, par comptage des oscillations du signal hétérodyne Sₕ reçu. Ensuite, un filtrage électronique passe-bande est appliqué au signal hétérodyne Sₕ dans une bande spectrale excluant la fréquence de battement f_{b(1)} et contenant la fréquence de battement f_{b(2)} de la composante secondaire Sₕ₍₂₎ du signal hétérodyne. On peut alors déterminer la fréquence de battement f_{b(2)} par comptage des oscillations du signal hétérodyne filtré. Notons que le filtre électronique peut être fixe ou ajustable en fonction de la gamme de distance de la scène. Lorsque la bande spectrale est fixe et prédéfinie, il n'est alors pas nécessaire de procéder à la détermination de la valeur de la fréquence de battement f_{b(1)}. En revanche, déterminer au préalable la valeur de la fréquence de battement f_{b(1)} permet d'avoir un gabarit du filtre plus fin, donc une mesure de la fréquence f_{b(2)} plus précise, et permet de mesurer une gamme spectrale plus large.

Notons que le signal hétérodyne Sₕ reçu peut également comporter une composante supplémentaire Sₕ₍₃₎ associée à l'interférence entre le premier écho S_{or,c(1)} et le deuxième écho S_{or,c(2)}, avec une fréquence de battement f_{b(3)}. L'amplitude de cette composante Sₕ₍₃₎ peut être comparable à celle de la composante Sₕ₍₁₎ en particulier lorsque l'intensité du signal de référence Sᵣ et celle du premier écho S_{or,c(1)} sont similaires. La fréquence de battement f_{b(3)} est proportionnelle à 2z_{sc}, ce qui est proche de f_{b(1)} qui est proportionnelle à 2z_{sc}-zᵣ. Aussi, le filtrage électronique prévoit de préférence de couper au moins les deux fréquences de battement f_{b(1)} et f_{b(3)}, par exemple en coupant une bande spectrale continue incluant les valeurs f_{b(1)} et f_{b(3)}.

Dans le cas d'une méthode de détermination de la fréquence de battement par transformée de Fourrier rapide (FFT, pour *Fast Fourier Transformation,* en anglais), l'unité de traitement effectue une FFT du signal hétérodyne Sₕ reçu, puis identifie le pic de la fréquence de battement f_{b(1)} et celui de la fréquence de battement f_{b(2)}. Cette analyse spectrale peut être effectuée par un algorithme ou un circuit électrique. Comme indiqué précédemment, une partie du circuit électrique de l'unité de traitement peut être située dans les pixels de détection, être située dans une unité distincte de ces pixels, laquelle peut être intégrée dans une structure comportant le photodétecteur matriciel ou déportée dans un ordinateur.

Ensuite, connaissant la valeur de la fréquence de battement f_{b(2)}, l'unité de traitement 60 détermine la distance z_{sc} de la scène à partir de la relation z_{sc} = cTf_{b(2)}/4B, avec une résolution en distance Δz_{sc} = c/4B, laquelle est améliorée d'un facteur 2 par rapport à celle associée à la fréquence de battement fᵣ₍₁₎. En effet, la mesure est ici basée sur un double aller-retour du signal objet et non pas sur un simple aller-retour.

Aussi, le système imageur 1 selon l'invention présente l'avantage de déterminer la distance z_{sc} de la scène 2 avec une résolution en distance Δz_{sc} améliorée d'un facteur 2, que ce soit en mode 'mono-point' ou en mode 'flash'. Ceci est obtenu en collectant le deuxième écho S_{or,c(2)} du signal objet rétrodiffusé Sₒᵣ, qui a été réfléchi par le réflecteur 42 puis rétrodiffusé à nouveau par la scène 2, et en exploitant la fréquence de battement f_{b(2)} de la composante Sₕ₍₂₎ du signal hétérodyne Sₕ. Ainsi, le *chirp* B du signal primaire Sₚ n'est pas modifié, ce qui écarte toute augmentation de la consommation du système imageur 1 et toute dégradation de ses performances (du fait de la non-linéarité du *chirp* ou d'une modulation de la puissance optique émise par la source optique 10). De plus, l'unité de traitement 60 ne présente pas une complexité significativement accrue de son électronique de détection des fréquences de battement f_{b(1)} et f_{b(2)}.

On décrit maintenant, en référence aux figures 4A à 4C, un exemple concret de détermination de la distance z_{sc} avec une résolution améliorée Δz_{sc}, à partir de la mesure de la fréquence de battement f_{b(2)} de la composante secondaire Sₕ₍₂₎ du signal hétérodyne Sₕ. Dans cet exemple, le signal primaire Sₚ présente un *chirp* B égal à 7.5GHz, une période T égale à 30ms, une longueur d'onde λ de 633nm, et la scène est située à une distance z_{sc} de 50cm, le trajet zᵣ du signal de référence Sᵣ étant négligeable devant la distance z_{sc}. On considère que l'intensité du premier écho S_{or,c(1)} est égale à 1% de celle du signal de référence Sᵣ, et l'intensité du deuxième écho S_{or,c(2)} est égale à 0.09% de celle du signal de référence Sᵣ. Enfin, on ne tient pas compte des différents bruits du système imageur, dans la mesure où cet exemple a pour objectif d'illustrer l'amélioration de la résolution en distance Δz_{sc}. La fig.4A illustre l'intensité Iₕ du signal hétérodyne Sₕ(t) reçu et détecté par le photodétecteur 50. On remarque que le signal n'est pas une sinusoïde parfaite puisqu'il est le résultat d'une interférence à 3 ondes et non pas d'une interférence à 2 ondes.

Dans le cas où l'on utilise la méthode de comptage des oscillations pour déterminer la fréquence de battement f_{b(2)}, on compte le nombre N₍₁₎ d'oscillations du signal hétérodyne Sₕ(t) dans la mesure où il est égal au nombre d'oscillations de la composante principale Sₕ₍₁₎. Dans cet exemple, on compte N₍₁₎ égal à 24 sur une période T, et on en déduit la fréquence de battement principal f_{b(1)} = N₍₁₎/T = 800Hz. On applique ensuite au signal hétérodyne Sₕ(t) un filtre électronique passe-bande excluant la fréquence f_{b(1)}, et on obtient le signal filtré. La fig.4B illustre l'intensité I_{hf} du signal filtré obtenu. Cela correspond à la composante secondaire Sₕ₍₂₎(t) associée au deuxième écho S_{or,c(2)}. On compte alors le nombre N₍₂₎ d'oscillations de la composante Sₕ₍₂₎(t), qui est égal ici à 49 sur une période T, ce qui correspond à une fréquence de battement secondaire f_{b(2)} = N₍₂₎/T = 1633Hz environ. On peut alors déterminer la distance de la scène à partir de la relation z_{sc} = N₍₂₎c/4B, qui est égal ici à 49cm, cette distance z_{sc} étant calculée avec une résolution Δz_{sc} = c/4B égale à 1cm seulement.

Dans le cas où l'on utilise la méthode par FFT pour déterminer la fréquence de battement f_{b(2)}, on effectue une FFT du signal hétérodyne détecté Sₕ(t) illustré sur la fig.4A, dont le spectre obtenu est illustré sur la fig.4C. Celui-ci montre effectivement la fréquence principale f_{b(1)} et la fréquence secondaire f_{b(2)}. On trouve ici que la fréquence secondaire f_{b(2)} est égale à 1633Hz environ, ce qui permet de déterminer la distance de la scène à partir de la relation z_{sc} = f_{b(2)}cT/4B, égale à 49cm avec une résolution en distance Δz_{sc} = c/4B égale également à 1cm.

On décrit maintenant, en référence aux figures 5A à 5D, une comparaison de la détermination de la distance z_{sc} avec une résolution Δz_{sc} dans le cas d'une approche selon l'art antérieur (i.e. à partir de la fréquence de battement f_{b(1)}) et dans le cas de l'invention (i.e. à partir de la fréquence de battement f_{b(2)}), pour deux objets dont l'un est situé à une distance de 50cm et l'autre à 51.5cm.

Dans le cas d'un système imageur selon l'art antérieur, le dispositif optique d'imagerie ne comporte pas le réflecteur selon l'invention, de sorte que le signal objet rétrodiffusé Sₒᵣ et collecté ne comporte que des faisceaux (premier écho) ayant effectué un simple aller-retour vis-à-vis de la scène 2. Aussi, les signaux hétérodynes détectés (cf. fig.5A pour l'objet situé à 50cm, et fig.5B pour l'objet situé à 51.5cm), sont des sinusoïdes parfaites issues d'une interférence à 2 ondes (le signal de référence Sᵣ et le signal objet rétrodiffusé Sₒᵣ). Dans le cas de l'objet à 50cm, on compte un nombre N de 24 oscillations, soit une distance z_{sc} = Nc/2B de 48cm avec une résolution Δz_{sc} = c/2B de 2cm. Dans le cas de l'objet à 51,5cm, on compte également un nombre N de 24 oscillations, soit une distance z_{sc} de 48cm avec une résolution Δz_{sc} de 2cm. Il en résulte donc que, sans surprise, le système imageur selon cet exemple de l'art antérieur n'est pas en mesure de discriminer deux objets dont l'écart en distance est inférieur à la résolution en distance.

Dans le cas du système imageur selon l'invention, le dispositif optique d'imagerie 40 comporte le réflecteur 44, de sorte que le signal objet rétrodiffusé Sₒᵣ collecté comporte le premier écho S_{or,c(1)} formés des faisceaux ayant effectué un simple aller-retour vis-à-vis de la scène, et le deuxième écho S_{or,c(2)} formé des faisceaux ayant effectué un double aller-retour. Aussi, on filtre le signal hétérodyne Sₕ(t) détecté et on obtient la deuxième composante Sₕ₍₂₎(t) (cf. fig.5C pour l'objet situé à 50cm, et fig.5D pour l'objet situé à 51.5cm). Dans le cas de l'objet à 50cm, on compte un nombre N₍₂₎ de 49 oscillations, soit une distance z_{sc} = N₍₂₎c/4B de 49cm avec une résolution Δz_{sc} = c/4B de 1cm. Dans le cas de l'objet à 51,5cm, on compte un nombre N₍₂₎ de 50 oscillations, soit une distance z_{sc} de 50cm avec toujours une résolution Δz_{sc} de 1cm. Aussi, l'amélioration de la résolution en distance Δz_{sc} par le fait de collecter des faisceaux du signal objet rétrodiffusé ayant effectué un double aller-retour vis-à-vis de la scène (deuxième écho) permet effectivement de discriminer deux objets présentant un faible écart de distance (ou une faible variation de distance du même objet entre deux instants de mesure successifs.

Selon un mode de réalisation, l'intensité du signal de référence Sᵣ peut être ajustée pour faciliter la détermination de la fréquence f_{b(2)}. Ainsi, dans le cas où la fréquence f_{b(2)} est déterminée par la méthode de comptage des oscillations, il est avantageux d'optimiser le contraste des oscillations de la composante Sₕ₍₂₎ du signal hétérodyne Sₕ, et donc d'ajuster l'intensité du signal de référence Sᵣ à une valeur sensiblement égale à celle du deuxième écho S_{or,c(2)}. Il est également possible de maximiser l'amplitude des oscillations de la composante Sₕ₍₂₎ en augmentant l'intensité du signal de référence Sᵣ par exemple via une boucle d'asservissement qui agit sur l'intensité du signal de référence Sᵣ. On veillera à ne pas saturer le signal hétérodyne Sₕ reçu et détecté par le photodétecteur 50 (i.e. le signal total détecté, non filtré et comportant toutes les composantes fréquentielles).

Les figures 6A à 6D sont des vues schématiques du réflecteur 42 selon différentes variantes de réalisation.

Le réflecteur 42 peut être situé au niveau de l'élément optique de collection 41, par exemple de manière coplanaire à celui-ci, et présenter une forme d'anneau (couronne) entourant continûment ce dernier (cf. fig.6A). Il peut être formé de segments annulaires entourant partiellement l'élément optique de collection 41. En variante, il peut présenter une forme quelconque, ici carrée, accolé ou non à l'élément optique de collection 41 (fig.6B). Dans ces exemples, le réflecteur 42 est de préférence formé d'une surface continûment réfléchissante ou rétroréfléchissante.

Le réflecteur 42 peut ne pas être situé dans le plan de l'élément optique de collection 41, et peut être situé en amont ou en aval de ce dernier. Par exemple, il peut être situé au niveau du photodétecteur, i.e. dans le plan ou à proximité du plan de détection, que le photodétecteur 50 soit une photodiode ou de type matriciel. A ce titre, la fig.6C illustre la situation où le photodétecteur est matriciel (système imageur 1 de type 'flash') et comporte une matrice de pixels de détection 51 avec un facteur de remplissage inférieur à l'unité, le réflecteur 42 peut être situé dans les zones non photosensibles de la matrice de pixels de détection 51. Dans ce cas de figure et lorsque le réflecteur 42 est rétroréfléchissant, les coins de cube du réflecteur 42 présentent de préférence une dimension latérale très supérieure à la longueur d'onde, par exemple supérieure à 10 fois la longueur d'onde du signal primaire, de sorte que les coins de cube ne diffractent pas.

Par ailleurs, le réflecteur 42 peut être formé d'une surface continûment réfléchissante ou rétroréfléchissante, ou être formé de surfaces réfléchissantes ou rétroréfléchissantes 42.2 non jointives et séparées les unes des autres par une surface transparente ou réfléchissante 42.1 à la longueur d'onde des signaux optiques d'intérêt, comme l'illustre la fig.6D. Dans le cas où la surface 42.1 est transparente, ce mode de réalisation est particulièrement intéressant lorsque le réflecteur 42 est situé en amont de l'élément optique de collection 41 et est traversé par l'axe optique de collection (cf. fig.10A et 10B). A ce titre, le réflecteur 42 peut être formé d'une surface centrale traversée par l'axe optique de collection, comportant les surfaces réfléchissantes ou rétroréfléchissantes 42.2 séparées les unes des autres et entourées par une surface transparente 42.1, et d'une surface périphérique qui entoure la surface centrale, dans laquelle les surfaces réfléchissante ou rétroréfléchissantes 42.2 sont accolées les unes aux autres.

La figure 7A est une vue schématique et partielle d'un système imageur 1 selon un mode de réalisation de type 'mono-point', dans lequel le réflecteur 42 est rétroréfléchissant. La figure 7B illustre un détail de la fig.7A pour mettre en évidence une condition sur la distance maximale rₘₐₓ de la bordure latérale du réflecteur 42 vis-à-vis de l'axe optique de collection.

Selon un mode de réalisation, le réflecteur 42 est rétroréfléchissant, dans le sens où les faisceaux lumineux incidents sont réfléchis avec un axe de réflexion identique à l'axe d'incidence. Ainsi, le faisceau lumineux diffusé par un point de la scène 2 et réfléchi par le réflecteur 42 rétroréfléchissant est renvoyé sur ce point de la scène 2 ou à proximité immédiate. Aussi, un tel réflecteur 42 permet de ne pas mélanger, parmi les faisceaux lumineux du signal collecté S_{or,c}, les faisceaux lumineux en provenance de plusieurs points différents de la scène 2, et donc de ne pas dégrader la résolution latérale du système imageur 1. Dans le cas d'un système imageur 1 de type 'mono-point', cela permet que la détermination de la distance z_{sc} ne soit pas parasitée par des faisceaux lumineux provenant d'objets situés à d'autres distances. Et dans le cas d'un système imageur 1 de type 'flash', on évite ainsi de dégrader la qualité ou la résolution spatiale de la cartographie de distance déterminée.

Le réflecteur 42 est agencé vis-à-vis de l'axe optique de l'élément optique de collection 41, de sorte qu'il présente une bordure latérale externe située à une distance maximale rₘₐₓ de cet axe optique. De préférence, cette distance maximale rₘₐₓ est inférieure à √(cz_{sc}/2B), ceci pour ne pas dégrader la résolution en distance Δz_{sc} du système imageur 1. En effet, comme l'illustre la figure 7B, un faisceau lumineux de la partie non collectée S_{or,nc} qui serait rétroréfléchi au niveau de la bordure du réflecteur 42, puis rétrodiffusé suivant l'axe optique de l'élément optique de collection 41, parcourrait alors une distance z_{sc} + √(z_{sc}²+rₘₐₓ²), et non pas 2z_{sc}, ce qui induirait une erreur de l'ordre de rₘₐₓ²/2z_{sc} dans l'hypothèse où rₘₐₓ ≪ z_{sc}. Aussi, cette erreur rₘₐₓ²/2z_{sc} devrait avantageusement être inférieure à la résolution en distance Δz_{sc} égale à c/4B, ce qui conduit à la condition rₘₐₓ < √(cz_{sc}/2B). Notons que cette condition n'est pas très restrictive, dans la mesure où on obtient rₘₐₓ < 10cm pour z_{sc}=50cm et B=7GHz.

Le réflecteur 42 présente une surface adaptée pour maximiser le nombre de photons du signal S_{or,nc} interceptés puis réfléchis, ce qui augmente en conséquence l'amplitude du deuxième écho S_{or,c(2)} et donc la portée en distance du système imageur 1, sans pour autant nuire à la compacité du module de réception du système imageur 1. Quoi qu'il en soit, il est avantageux que le réflecteur 42 présente des dimensions qui respectent la condition mentionnée plus haut sur la distance maximale rₘₐₓ de la bordure latérale.

La figure 8A est une vue schématique et partielle d'un système imageur 1 selon un mode de réalisation, dans lequel le réflecteur 42 est non rétroréfléchissant, c'est-à-dire seulement réfléchissant. La figure 8B illustre un détail de la fig.8A pour mettre en évidence une condition sur la distance maximale rₘₐₓ de la bordure latérale du réflecteur 42 vis-à-vis de l'axe optique de collection.

Un faisceau lumineux incident sur le réflecteur 42 n'est donc pas réfléchi suivant un axe de réflexion identique à l'axe d'incidence, mais suit la loi de réflexion de Snell-Descartes. Il est donc réfléchi en direction d'un point différent de celui d'où provient le faisceau lumineux de la partie S_{or,nc} du signal objet rétrodiffusé Sₒᵣ. Pour un faisceau lumineux qui se réfléchit sur le réflecteur 42 à la distance rₘₐₓ, on remarque que la distance entre ces deux points de la scène est de l'ordre de 2rₘₐₓ (pour une scène sensiblement orthogonale à l'axe optique). Il en résulte que la condition précédente sur la distance rₘₐₓ de la bordure latérale externe du réflecteur 42 est modifiée et devient : rₘₐₓ < √(cz_{sc}/6B). Cette condition reste encore peu restrictive puisqu'on obtient rₘₐₓ < 6cm dans le cas où z_{sc} = 50cm et B=7GHz. Quoi qu'il en soit, il est préférable de réserver l'utilisation d'un réflecteur 42 non rétroréfléchissant à un système imageur 1 de type 'mono-point'. Par ailleurs, on veillera à ce que la séparation angulaire entre les deux points éclairés de la scène 2 reste inférieure à la résolution angulaire iFOV (pour *individual Field Of View,* en anglais) de l'élément optique de collection 41, avec la condition 2atan(rₘₐₓ/z_{sc})<iFOV, de manière à ne pas dégrader la résolution latérale. Notons que le champ de vue FOV (*Field of View,* en anglais) de l'élément optique de collection 41 est l'angle dans lequel le photodétecteur 50 est sensible à la partie S_{or,c} du signal objet rétrodiffusé Sₒᵣ au travers de l'élément optique de collection 41.

Selon un mode de réalisation, le système imageur 1 peut présenter une configuration dite mono-statique, dans le sens où l'axe optique d'illumination de la scène 2 et l'axe optique de collection sont colinéaires. A ce titre, la figure 9 est une vue schématique et partielle d'un tel système imageur 1, ici de type 'mono-point', mais cette configuration peut également être mise en œuvre pour un système imageur 1 de type 'flash'. Par ailleurs, le réflecteur 42 est ici rétroréfléchissant.

Cette configuration repose par exemple sur une architecture d'interféromètre de Michelson. Le système imageur 1 comporte un miroir additionnel 24 placé sur le chemin optique du signal de référence Sᵣ, et l'élément optique de collection 41 (et le réflecteur 42) est situé entre la scène 2 et l'élément optique séparateur 21 (et donc en amont de l'élément optique recombineur 23).

Ainsi, l'élément optique séparateur 21 sépare le signal primaire Sₚ en le signal objet Sₒ qui est transmis en direction de la scène, et en le signal de référence Sᵣ qui est réfléchi en direction du miroir additionnel 24. Celui-ci réfléchit le signal de référence Sᵣ en direction de l'élément optique recombineur 23. Une partie S_{or,c} du signal objet rétrodiffusé Sₒᵣ est collectée par l'élément optique de collection 41, puis est réfléchie par l'élément optique séparateur 21 en direction d'un miroir de renvoi 25. Aussi, l'élément optique séparateur 21 présente la fonction de recombinaison du signal de référence Sᵣ et de la partie collectée S_{or,c} du signal objet rétrodiffusé Sₒᵣ, et est noté « 21, 23 » sur la figure.

Le système imageur 1 présente ici l'avantage de faciliter la détection et la détermination de la distance z_{sc} d'objets ayant une forte composante spéculaire, c'est-à-dire que la lumière est rétrodiffusée par l'objet en question de la scène dans un cône de rétrodiffusion (distribution angulaire de l'intensité lumineuse rétrodiffusée) centré sur une direction principale, cette direction pouvant être proche de la direction de réflexion spéculaire. En effet, dans le cas d'un système imageur 1 de type bi-statique présenté précédemment (fig.2A-2B et fig.6A-7A), le deuxième écho S_{or,c(2)} pourrait être rétrodiffusé principalement en direction de la source optique 10, et peu en direction de l'élément optique de collection 41, réduisant ainsi l'intensité du signal S_{or,c(2)} collecté, et donc la capacité du système imageur 1 à détecter ce type d'objet de la scène 2. Ce n'est pas le cas pour un système imageur 1 de type mono-statique, dans la mesure où le deuxième écho est principalement renvoyé vers l'élément optique de collection 41 et le réflecteur 42 (l'indicatrice angulaire est étroite). Par ailleurs, cette configuration mono-statique pour un système imageur 1 présente l'avantage de réduire voire d'écarter les phénomènes d'ombrage dans la cartographie de distance déterminée, par le fait même que ces deux axes optiques sont confondus.

Selon un mode de réalisation, le réflecteur 42 est réfléchissant ou rétroréfléchissant, et est formé de surfaces réfléchissantes ou rétroréfléchissantes non jointives séparées les unes des autres par une surface transparente. Le réflecteur 42 peut alors être situé en amont de l'élément optique de collection 41, dans le sens où l'axe optique de collection traverse le réflecteur 42. A ce titre, les figures 10A et 10B sont des vues schématiques et partielles d'un tel système imageur 1, dans une configuration bi-statique (fig.10A) et dans une configuration mono-statique (fig.10B).

Dans l'exemple de la fig.10A, le système imageur 1 est similaire à celui de la fig.6A et s'en distingue essentiellement en ce que le réflecteur 42 n'est pas coplanaire avec l'élément optique de collection 41 mais est situé en amont de celui-ci. Par ailleurs, l'élément optique de collection 41 et le réflecteur 42 sont ici situés en aval de l'élément optique recombineur 23 mais ils pourraient être situés en amont.

Dans l'exemple de la fig.10B, le système imageur 1 est similaire à celui de la fig.9 et s'en distingue essentiellement en ce que le réflecteur 42 est également situé en amont de l'élément optique de collection 41. Notons que l'élément optique 21 (noté sur la figure 21, 23) est à la fois l'élément optique séparateur 21 et l'élément optique recombineur 23.

Un système imageur 1 selon ce mode de réalisation présente l'avantage de réduire l'encombrement latéral du module de réception par rapport aux exemples des fig.2A et 2B.

Des modes de réalisation particuliers viennent d'être décrits. Différentes variantes et modifications apparaîtront à l'homme du métier. Ainsi, le système imageur 1 peut présenter une configuration en espace libre comme une configuration en optique guidée, comme décrit dans le document WO2021/144357A1 mentionné précédemment.

## Revendications

1. Système imageur (1) LIDAR de type FMCW, adapté à déterminer une distance z_{sc} le séparant d'une scène (2), comportant :
∘ une source de lumière cohérente (10), adaptée à émettre un signal primaire Sₚ continu modulé en fréquence ;
∘ un dispositif optique de séparation et recombinaison (20), adapté à séparer le signal primaire Sₚ en un signal de référence Sᵣ dirigé vers un photodétecteur (50) et en un signal objet Sₒ dirigé vers la scène (2), laquelle rétrodiffuse une partie du signal objet Sₒ appelée signal objet rétrodiffusé Sₒᵣ ; et adapté à diriger vers le photodétecteur (50) suivant un même axe optique le signal de référence Sᵣ ainsi qu'une partie S_{or,c} du signal objet rétrodiffusé Sₒᵣ collectée par un élément optique de collection (41) ;
∘ l'élément optique de collection (41), adapté à collecter la partie S_{or,c} du signal objet rétrodiffusé Sₒᵣ ;
∘ le photodétecteur (50), destiné à recevoir le signal de référence Sᵣ et la partie collectée S_{or,c} du signal objet rétrodiffusé S_{or,c}, lesquels interfèrent pour former un signal hétérodyne Sₕ ;
∘ une unité de traitement (60), adaptée à déterminer la distance z_{sc} de la scène à partir d'une fréquence de battement du signal hétérodyne Sₕ ;
∘ **caractérisé en ce qu'**il comporte en outre un réflecteur (42) adapté à réfléchir en direction de la scène (2) une partie S_{or,nc} du signal objet rétrodiffusé Sₒᵣ non collectée par l'élément optique de collection (41),
• la partie collectée S_{or,c} du signal objet rétrodiffusé Sₒᵣ étant alors formée de premiers faisceaux lumineux S_{or,c(1)} n'ayant pas été réfléchis par le réflecteur (42) et de deuxièmes faisceaux lumineux S_{or,c(2)} ayant été réfléchis par le réflecteur (42) puis par la scène (2) ;
• le signal hétérodyne Sₕ présentant donc une composante principale Sₕ₍₁₎ associée auxdits premiers faisceaux lumineux S_{or,c(1)}, et une composante secondaire Sₕ₍₂₎ associée auxdits deuxièmes faisceaux lumineux S_{or,c(2)} ;
∘ et **en ce que** l'unité de traitement (60) est adaptée à déterminer la distance z_{sc} de la scène (2) à partir d'une fréquence de battement f_{b(2)} de la composante secondaire Sₕ₍₂₎ du signal hétérodyne Sₕ.

2. Système imageur (1) selon la revendication 1, dans lequel le réflecteur (42) est rétroréfléchissant, pour réfléchir en direction de la scène (2) des faisceaux lumineux incidents suivant un axe de réflexion identique à leur axe d'incidence.

3. Système imageur (1) selon la revendication 1 ou 2, dans lequel le réflecteur (42) présente une bordure latérale située à une distance maximale rₘₐₓ d'un axe optique de l'élément optique de collection (41), et est dimensionné de sorte que la distance maximale rₘₐₓ est inférieure à √(cz_{sc}/2B) lorsque le réflecteur (42) est rétroréfléchissant, où c est la vitesse de la lumière dans le vide, et B est une variation de la fréquence du signal primaire Sₚ sur une période T de la modulation, et de sorte que la distance maximale rₘₐₓ est inférieure à √(cz_{sc}/6B) lorsque le réflecteur (42) est non rétroréfléchissant.

4. Système imageur (1) selon l'une quelconque des revendications 1 à 3, dans lequel le réflecteur (42) est situé dans le plan de l'élément optique de collection (41).

5. Système imageur (1) selon l'une quelconque des revendications 1 à 3, dans lequel le réflecteur (42) est situé en aval de l'élément optique de collection (41) au niveau du photodétecteur (50).

6. Système imageur (1) selon l'une quelconque des revendications 1 à 3, dans lequel le réflecteur (42) est situé en amont de l'élément optique de collection (41) avec un axe optique de collection qui le traverse, le réflecteur (42) étant alors formé de surfaces réfléchissantes ou rétroréfléchissantes (42.2) séparées les unes des autres et entourées par une surface transparente (42.1) à la longueur d'onde du signal primaire Sₚ.

7. Système imageur (1) selon la revendication 6, dans lequel le réflecteur (42) comporte une surface centrale traversée par l'axe optique de collection, dans laquelle il est formé de surfaces réfléchissantes ou rétroréfléchissantes (42.2) séparées les unes des autres et entourées par une surface transparente (42.1), et une surface périphérique qui entoure la surface centrale, dans laquelle les surfaces réfléchissante ou rétroréfléchissantes (42.2) sont accolées les unes aux autres.

8. Système imageur (1) selon l'une quelconque des revendications 1 à 7, adapté à n'éclairer qu'un point de la scène (2), ou adapté à éclairer simultanément une pluralité de points de la scène (2) et comportant alors un dispositif optique de projection (30) du signal objet Sₒ sur la scène (2) pour éclairer simultanément la pluralité de points de la scène (2) et un dispositif optique d'imagerie (40) adapté à former une image de la scène éclairée dans le plan du photodétecteur (50).

9. Système imageur (1) selon l'une quelconque des revendications 1 à 8, dans lequel l'unité de traitement (60) détermine la fréquence de battement f_{b(2)} par comptage des oscillations de la composante secondaire S_{or,c(2)} du signal hétérodyne Sₕ.

10. Système imageur (1) selon la revendication 9, dans lequel l'unité de traitement (60) est adaptée à déterminer une fréquence de battement f_{b(1)} de la composante principale Sₕ₍₁₎ du signal hétérodyne Sₕ, puis appliquer un filtre passe-bande au signal hétérodyne Sₕ excluant la fréquence de battement f_{b(1)} déterminée pour obtenir la composante secondaire Sₕ₍₂₎, et enfin à déterminer la fréquence de battement f_{b(2)} de la composante secondaire Sₕ₍₂₎.

11. Système imageur (1) selon l'une quelconque des revendications 1 à 8, dans lequel l'unité de traitement (60) détermine la fréquence de battement f_{b(2)} par transformée de Fourier appliquée au signal hétérodyne Sₕ.

12. Système imageur (1) selon l'une quelconque des revendications 1 à 11, présentant une configuration dite mono-statique où un axe optique d'illumination de la scène par le signal objet Sₒ est identique à un axe optique de collection de l'élément optique de collection (41), et comportant un miroir (24) vers lequel le signal de référence Sᵣ est dirigé par un élément optique séparateur (21) du dispositif optique de séparation et recombinaison (20).

13. Système imageur (1) selon l'une quelconque des revendications 1 à 11, présentant une configuration dite bi-statique où un axe optique d'illumination de la scène par le signal objet Sₒ est différent d'un axe optique de collection de l'élément optique de collection (41).

## Patentansprüche

1. LIDAR-Bildgebungssystem (1) vom FMCW-Typ, das geeignet ist, einen Abstand z_{sc} zu bestimmen, der es von einer Szene (2) trennt, umfassend:
∘ eine kohärente Lichtquelle (10), die geeignet ist, ein kontinuierliches, frequenzmoduliertes Primärsignals Sₚ zu senden;
∘ eine optische Trenn- und Rekombinationsvorrichtung (20), die geeignet ist, das Primärsignal Sₚ in ein Referenzsignal Sᵣ, das zu einem Fotodetektor (50) geleitet wird, und in ein Objektsignal Sₒ zu trennen, das zur Szene (2) geleitet wird, die einen Teil des Objektsignals Sₒ, der als zurückgestreutes Objektsignal Sₒᵣ bezeichnet wird, zurückstreut; und die geeignet ist, das Referenzsignal Sᵣ sowie einen von einem optischen Sammelelement (41) gesammelten Teil S_{or,c} des zurückgestreuten Objektsignals Sₒᵣ entlang einer gleichen optischen Achse an den Fotodetektor (50) zu leiten;
∘ das optische Sammelelement (41), das geeignet ist, den Teil S_{or,c} des zurückgestreuten Objektsignals Sₒᵣ zu sammeln;
∘ den Fotodetektor (50), der dazu bestimmt ist, das Referenzsignal Sᵣ und den gesammelten Teil S_{or,c} des zurückgestreuten Objektsignals S_{or,c}, die sich gegenseitig überlagern, zu empfangen, um ein Überlagerungssignal Sₕ zu bilden;
∘ eine Verarbeitungseinheit (60), die geeignet ist, den Abstand z_{sc} der Szene ausgehend von einer Schlagfrequenz des Überlagerungssignals Sₕ zu bestimmen;
∘ **dadurch gekennzeichnet, dass** es ferner einen Reflektor (42) umfasst, der geeignet ist, einen Teil S_{or,nc} des zurückgestreuten Objektsignals Sₒᵣ, der nicht von dem optischen Sammelelement (41) gesammelt wurde, in Richtung der Szene (2) zu reflektieren,
• wobei der gesammelte Teil S_{or,c} des zurückgestreuten Objektsignals Sₒᵣ dann aus ersten Lichtstrahlen S_{or,c(1)}, die nicht vom Reflektor (42) reflektiert wurden, und aus zweiten Lichtstrahlen S_{or,c(2)}, die vom Reflektor (42) und dann von der Szene (2) reflektiert wurden, gebildet wird;
• wobei das Überlagerungssignal Sₕ dann eine Hauptkomponente S_{h(1),} die mit den ersten Lichtstrahlen S_{or,c(1)} verbunden ist, und eine Sekundärkomponente Sₕ₍₂₎, die mit den zweiten Lichtstrahlen S_{or,c(2)} verbunden ist, aufweist;
∘ und dass die Verarbeitungseinheit (60) geeignet ist, den Abstand z_{sc} der Szene (2) ausgehend von einer Schlagfrequenz f_{b(2)} der Sekundärkomponente Sₕ₍₂₎ des Überlagerungssignals Sₕ zu bestimmen.

2. Bildgebungssystem (1) nach Anspruch 1, wobei der Reflektor (42) retroreflektierend ist, um die einfallenden Lichtstrahlen entlang einer Reflexionsachse, die identisch mit ihrer Einfallsachse ist, in Richtung der Szene (2) zu reflektieren.

3. Bildgebungssystem (1) nach Anspruch 1 oder 2, wobei der Reflektor (42) einen seitlichen Rand aufweist, der sich in einem maximalen Abstand rₘₐₓ von einer optischen Achse des optischen Sammelelements (41) befindet, und so dimensioniert ist, dass der maximale Abstand rₘₐₓ kleiner ist als √(cz_{sc}/2B), wenn der Reflektor (42) retroreflektierend ist, wobei c die Lichtgeschwindigkeit im Vakuum ist und B eine Änderung der Frequenz des Primärsignals Sₚ über einen Zeitraum T der Modulation ist, und so, dass der maximale Abstand rₘₐₓ kleiner ist als √(cz_{sc}/6B), wenn der Reflektor (42) nicht retroreflektierend ist.

4. Bildgebungssystem (1) nach einem der Ansprüche 1 bis 3, wobei sich der Reflektor (42) in der Ebene des optischen Sammelelements (41) befindet.

5. Bildgebungssystem (1) nach einem der Ansprüche 1 bis 3, wobei sich der Reflektor (42) nach dem optischen Sammelelement (41) an dem Fotodetektor (50) befindet.

6. Bildgebungssystem (1) nach einem der Ansprüche 1 bis 3, wobei sich der Reflektor (42) vor dem optischen Sammelelement (41) mit einer ihn durchquerenden optischen Sammelachse befindet, wobei der Reflektor (42) dann aus reflektierenden oder retroreflektierenden Oberflächen (42.2) gebildet ist, die voneinander getrennt und von einer Oberfläche (42.1) umgeben sind, die bei der Wellenlänge des Primärsignals Sₚ transparent ist.

7. Bildgebungssystem (1) nach Anspruch 6, wobei der Reflektor (42) eine zentrale Oberfläche, die von der optischen Sammelachse durchquert wird, wobei er aus reflektierenden oder retroreflektierenden Oberflächen (42.2) gebildet ist, die voneinander getrennt und von einer transparenten Oberfläche (42.1) umgeben sind, und eine periphere Oberfläche umfasst, die die zentrale Oberfläche umgibt, wobei die reflektierenden oder retroreflektierenden Oberflächen (42.2) aneinander anliegen.

8. Bildgebungssystem (1) nach einem der Ansprüche 1 bis 7, das geeignet ist, nur einen Punkt der Szene (2) zu beleuchten, oder das geeignet ist, eine Vielzahl von Punkten der Szene (2) gleichzeitig zu beleuchten, und dann eine optische Vorrichtung zur Projektion (30) des Objektsignals Sₒ auf die Szene (2), um die Vielzahl von Punkten der Szene (2) gleichzeitig zu beleuchten, und eine optische Bildgebungsvorrichtung (40) umfasst, die geeignet ist, ein Bild der beleuchteten Szene in der Ebene des Fotodetektors (50) zu bilden.

9. Bildgebungssystem (1) nach einem der Ansprüche 1 bis 8, wobei die Verarbeitungseinheit (60) die Schlagfrequenz f_{b(2)} durch Zählen der Schwingungen der Sekundärkomponente S_{or,c(2)} des Überlagerungssignals Sₕ bestimmt.

10. Bildgebungssystem (1) nach Anspruch 9, wobei die Verarbeitungseinheit (60) geeignet ist, eine Schlagfrequenz f_{b(1)} der Hauptkomponente Sₕ₍₁₎ des Überlagerungssignals Sₕ zu bestimmen und dann ein Bandpassfilter auf das Überlagerungssignal Sₕ anzuwenden, das die bestimmte Schlagfrequenz f_{b(1)} ausschließt, um die Sekundärkomponente Sₕ₍₂₎ zu erhalten, und schließlich die Schlagfrequenz f_{b(2)} der Sekundärkomponente Sₕ₍₂₎ zu bestimmen.

11. Bildgebungssystem (1) nach einem der Ansprüche 1 bis 8, wobei die Verarbeitungseinheit (60) die Schlagfrequenz f_{b(2)} durch eine auf das Überlagerungssignal Sₕ angewendete Fourier-Transformation bestimmt.

12. Bildgebungssystem (1) nach einem der Ansprüche 1 bis 11, das eine sogenannte monostatische Konfiguration aufweist, bei der eine optische Achse zur Beleuchtung der Szene durch das Objektsignal Sₒ identisch mit einer optischen Sammelachse des optischen Sammelelements (41) ist, und das einen Spiegel (24) umfasst, zu dem das Referenzsignal Sᵣ von einem optischen Trennelement (21) der optischen Trenn- und Rekombinationsvorrichtung (20) geleitet wird.

13. Bildgebungssystem (1) nach einem der Ansprüche 1 bis 11, das eine sogenannte bistatische Konfiguration aufweist, bei der eine optische Achse der Beleuchtung der Szene durch das Objektsignal Sₒ sich von einer optischen Sammelachse des optischen Sammelelements (41) unterscheidet.

## Claims

1. An FMCW-type LIDAR imaging system (1), adapted to determine a distance z_{sc} separating it from a scene (2), comprising:
∘ a coherent light source (10), adapted to emit a frequency-modulated continuous primary signal Sₚ;
∘ a separation and recombination optical device (20), adapted to separate the primary signal Sₚ into a reference signal Sᵣ directed towards a photodetector (50) and into an object signal Sₒ directed towards the scene (2), which backscatters a portion of the object signal Sₒ called the backscattered object signal Sₒᵣ; and adapted to direct towards the photodetector (50) along one and the same optical axis the reference signal Sᵣ as well as a portion S_{or,c} of the backscattered object signal Sₒᵣ collected by a collection optical element (41);
∘ the collection optical element (41), adapted to collect the portion S_{or,c} of the backscattered object signal Sₒᵣ;
∘ the photodetector (50), intended to receive the reference signal Sᵣ and the collected portion S_{or,c} of the backscattered object signal S _{or,c}, which interfere to form a heterodyne signal Sₕ;
∘ a processing unit (60), adapted to determine the distance z_{sc} of the scene from a beat frequency of the heterodyne signal Sₕ;
∘ **characterised in that** it further comprises a reflector (42) adapted to reflect in the direction of the scene (2) a portion S_{or,nc} of the backscattered object signal Sₒᵣ not collected by the collection optical element (41),
• the collected portion S _{or,c} of the backscattered object signal Sₒᵣ then being formed of first light beams S_{or,c(1)} not having been reflected by the reflector (42) and second light beams S_{or,c(2)} having been reflected by the reflector (42) and then by the scene (2);
• the heterodyne signal Sₕ therefore having a main component Sₕ₍₁₎ associated with said first light beams S_{or,c(1)}, and a secondary component Sₕ₍₂₎ associated with said second light beams S_{or,c(2)};
∘ and **in that** the processing unit (60) is adapted to determine the distance z_{sc} of the scene (2) from a beat frequency f_{b(2)} of the secondary component Sₕ₍₂₎ of the heterodyne signal Sₕ.

2. The imaging system (1) according to claim 1, wherein the reflector (42) is retroreflective, to reflect incident light beams in the direction of the scene (2) along an axis of reflection identical to their axis of incidence.

3. The imaging system (1) according to claim 1 or 2, wherein the reflector (42) has a lateral edge located at a maximum distance rₘₐₓ from an optical axis of the collection optical element (41), and is sized so that the maximum distance rₘₐₓ is less than √(cz_{sc}/2B) when the reflector (42) is retroreflective, where c is the speed of light in vacuum, and B is a variation of the frequency of the primary signal Sₚ over a period T of the modulation, and so that the maximum distance rₘₐₓ is less than √(cz_{sc}/6B) when the reflector (42) is non-retroreflective.

4. The imaging system (1) according to any one of claims 1 to 3, wherein the reflector (42) is located in the plane of the collection optical element (41).

5. The imaging system (1) according to any one of claims 1 to 3, wherein the reflector (42) is located downstream of the collection optical element (41) at the photodetector (50).

6. The imaging system (1) according to any one of claims 1 to 3, wherein the reflector (42) is located upstream of the collection optical element (41) with an optical axis of collection passing therethrough, the reflector (42) being then formed by reflective or retroreflective surfaces (42.2) separated from each other and surrounded by a surface (42.1) transparent to the wavelength of the primary signal Sₚ.

7. The imaging system (1) according to claim 6, wherein the reflector (42) comprises a central surface through which the optical axis of collection passes, wherein it is formed of reflective or retroreflective surfaces (42.2) separated from each other and surrounded by a transparent surface (42.1), and a peripheral surface which surrounds the central surface, in which the reflective or retroreflective surfaces (42.2) are adjoining each other.

8. The imaging system (1) according to any one of claims 1 to 7, adapted to illuminate only one point of the scene (2), or adapted to illuminate simultaneously a plurality of points of the scene (2) and then comprising an optical device (30) for projecting the object signal Sₒ onto the scene (2) to illuminate simultaneously the plurality of points of the scene (2) and an imaging optical device (40) adapted to form an image of the illuminated scene in the plane of the photodetector (50).

9. The imaging system (1) according to any one of claims 1 to 8, wherein the processing unit (60) determines the beat frequency f_{b(2)} by counting the oscillations of the secondary component S_{or,c(2)} of the heterodyne signal Sₕ.

10. The imaging system (1) according to claim 9, wherein the processing unit (60) is adapted to determine a beat frequency f_{b(1)} of the main component Sₕ₍₁₎ of the heterodyne signal Sₕ, then apply a bandpass filter to the heterodyne signal Sₕ excluding the determined beat frequency f_{b(1)} to obtain the secondary component Sₕ₍₂₎, and finally determine the beat frequency f_{b(2)} of the secondary component Sₕ₍₂₎.

11. The imaging system (1) according to any one of claims 1 to 8, wherein the processing unit (60) determines the beat frequency f_{b(2)} by a Fourier transform applied to the heterodyne signal Sₕ.

12. The imaging system (1) according to any one of claims 1 to 11, having a so-called monostatic configuration where an optical axis of illumination of the scene by the object signal Sₒ is identical to an optical axis of collection of the collection optical element (41), and comprising a mirror (24) towards which the reference signal Sᵣ is directed by a separator optical element (21) of the separation and recombination optical device (20).

13. The imaging system (1) according to any one of claims 1 to 11, having a so-called bistatic configuration where an optical axis of illumination of the scene by the object signal Sₒ is different from an optical axis of collection of the collection optical element (41).
